# FASCICULE DE BREVET EUROPEEN

(11) **EP 0 756 950 B1**
(45) Date de publication et mention de la délivrance du brevet: **23.02.2000**
(21) Numéro de dépôt: 96110661.4
(22) Date de dépôt: 02.07.1996
(51) Int. Cl.: B60C 15/06, B60C 15/00

(54) **Pneumatique avec des bourrelets renforcés**
Reifen mit verstärkten Wülsten
Tyre with reinforced beads

(30) Priorité: 31.07.1995 FR 9509407
(43) Date de publication de la demande: 05.02.1997
(73) Titulaire: COMPAGNIE GENERALE DES ETABLISSEMENTS MICHELIN - MICHELIN & CIE, 63040 Clermont-Ferrand Cédex (FR)
(72) Inventeur: De Loze de Plaisanc, Pierre, 63000 Clermont-Ferrand (FR)
(74) Mandataire: Devaux, Edmond-Yves

(56) Documents cités:
- EP-A- 0 595 653
- EP-A- 0 599 575
- BE-A- 657 324
- FR-A- 2 669 275

## Description

La présente invention concerne un pneumatique à armature de carcasse radiale destiné à porter de lourdes charges et gonflé à des pressions relativement fortes, et en particulier un pneumatique pour avions.

Les armatures de carcasse radiales de tels pneumatiques comportent généralement plusieurs nappes de câbles textiles, qui sont ancrées dans chaque bourrelet à au moins une tringle et le plus souvent une seule tringle. Les éléments de renforcement de ces armatures sont enroulés autour de ladite tringle de l'intérieur à l'extérieur en formant des retournements dont les extrémités respectives sont radialement espacées par rapport à l'axe de rotation du pneumatique. Les conditions sévères sous lesquelles sont utilisés les pneumatiques pour avions sont telles que l'endurance des bourrelets est faible, en particulier au niveau des retournements de l'armature de carcasse.

Une amélioration notable des performances est obtenue par la séparation des nappes de l'armature de carcasse en deux groupes. Le premier groupe comprend les nappes de l'armature de carcasse axialement intérieures dans la zone des bourrelets, ces nappes étant alors enroulées autour d'une tringle dans chaque bourrelet en allant de l'intérieur à l' extérieur du pneumatique. Le deuxième groupe est constitué d'au moins une nappe axialement extérieure dans la zone des bourrelets, nappe généralement enroulée autour de la tringle en allant de l'extérieur à l'intérieur du pneumatique.

De telles dispositions sont connues et montrées par exemple dans le brevet US 4 244 414 (Fig. 2), ou encore le brevet US 5 125 445.

L'endurance des bourrelets ainsi constitués peut être améliorée par la présence dans chaque bourrelet d'une nappe de renforcement supplémentaire enroulée autour de la tringle et formant ainsi un brin axialement extérieur et un brin axialement intérieur, ladite nappe de renforcement, nommée aussi languette intérieure, étant la nappe la plus proche du profilé caoutchouteux de remplissage ou bourrage, radialement au-dessus de la tringle d'ancrage. Une telle architecture est montrée dans le brevet US 5 285 835.

L'endurance des bourrelets de pneumatiques pour avions se doit cependant d'être encore améliorée, en particulier lorsqu'ils subissent de fortes surcharges pouvant leur conférer des écrasements de l'ordre de 50% et plus de leur hauteur. La solution proposée par la présente invention réside dans la disposition précise des extrémités des portions retournées ou retournements des nappes de carcasse intérieures et des extrémités des brins de la languette intérieure par rapport à la position radiale de l'extrémité radialement supérieure du bourrage caoutchouteux situé au-dessus de la tringle d'ancrage.

Conformément à l'invention, un pneumatique pour avion, gonflé à pression élevée, avec une bande de roulement, une armature de sommet et une armature de carcasse radiale comprenant au moins deux nappes axialement intérieures de câbles textiles, enroulées autour d'une tringle dans chaque bourrelet de l'intérieur à l'extérieur en formant des retournements et au moins une nappe axialement extérieure de câbles textiles superposée aux nappes intérieures sous l'armature de sommet et se séparant desdites nappes dans les bourrelets pour s'étendre le long des retournements dans lesdits bourrelets, ladite tringle étant radialement surmontée d'un bourrage de mélange caoutchouteux vulcanisé, de forme sensiblement triangulaire et dont le sommet radialement le plus éloigné de l'axe de rotation est à une distance D d'une droite, parallèle audit axe et passant par le centre géométrique du cercle circonscrit à la section transversale de la tringle d'ancrage, dite droite de référence, et comprenant aussi au moins une languette intérieure, enroulée autour de la tringle pour former un brin axialement intérieur et un brin axialement extérieur axialement adjacents au bourrage du dessus de tringle, caractérisé en ce que
- l'extrémité du brin axialement extérieur de la languette intérieure est située à une distance radiale L_{E} de la droite de référence telle que L_{E} soit comprise entre 0,40 D et 0,8O D ;
- l'extrémité du retournement de la nappe de carcasse intérieure disposée axialement la plus à l'intérieur est située à une distance H_{A} de la droite de référence telle que H_{A} soit comprise entre 0,15 D et 0,50 D, et en ce que,
- les extrémités respectivement du brin intérieur de la languette intérieure et des retournements des nappes de carcasse intérieures axialement les plus à l'extérieur sont situées à des distances radiales de la droite de référence supérieures à la distance D.

Préférentiellement, l'extrémité du brin intérieur de la languette intérieure est plus éloignée de la droite de référence que l'(les) extrémité(s) du (des) retournement (s) de la (des) nappe(s) de carcasse intérieure(s) axialement la (les) plus à l'extérieur.

De même, il est avantageux que les extrémités respectivement des brins de la languette intérieure et des nappes de carcasse intérieures soient radialement étagées, c'est-à-dire que chaque extrémité de nappe de renforcement soit située à une distance radiale de la droite de référence différente des distances radiales afférentes aux autres nappes.

Le bourrelet de pneumatique sera avantageusement complété par la présence d'une nappe de renforcement additionnelle de câbles textiles ou languette extérieure, située autour de la tringle axialement et radialement le plus à l'extérieur, et dont l'extrémité du brin axialement extérieur est située à une distance de la droite XX' inférieure ou égale à ± 0,15 D.

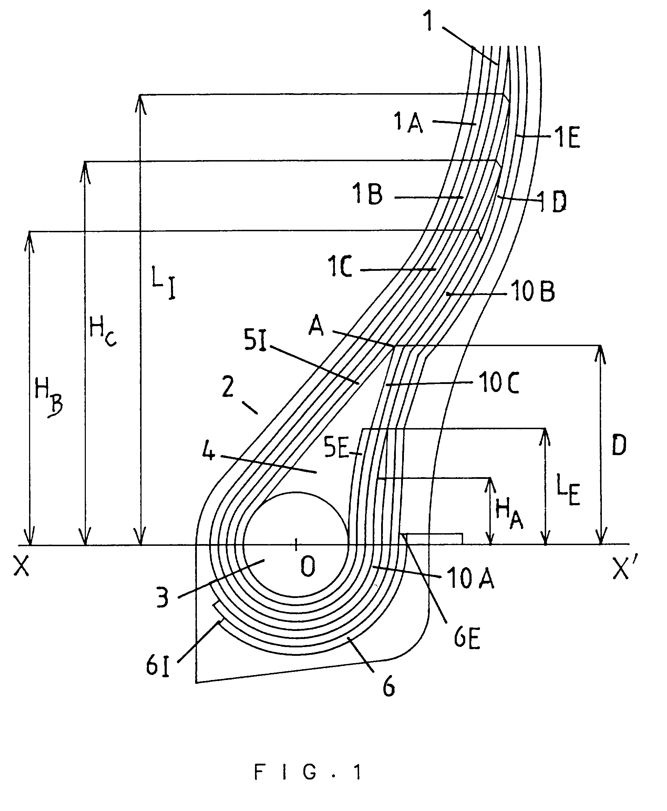

L'invention sera mieux comprise à l'aide de la description qui va suivre, faite en référence au dessin annexé et donnée à titre d'exemple non limitatif. Sur ce dessin, la figure 1 est une vue schématique en coupe transversale d'un bourrelet de pneumatique conforme à l'invention.

L'exemple décrit est celui d'un pneumatique de dimension normalisée 36 x 11.0 R 18 (normes de la Tire and Rim Association). L'armature de carcasse (1) est formée de cinq nappes (1A à 1E) de câbles textiles radiaux. Il faut entendre par câbles radiaux des câbles faisant avec la direction circonférentielle du pneumatique des angles pouvant être compris dans l'intervalle 90° ± 10°. Parmi ces cinq nappes, trois nappes (1A, 1B, 1C) axialement intérieures sont enroulées dans chaque bourrelet (2) autour d'une tringle (3) (ayant dans le cas étudié une section transversale circulaire), en allant de l'intérieur à l'extérieur du pneumatique P pour former des retournements (10A, 10B, 10C).

La section de la tringle (3) est surmontée radialement à l'extérieur par un profilé ou bourrage (4) de mélange élastomérique ayant sensiblement la forme d'un triangle dont le sommet A, radialement le plus éloigné de l'axe de rotation du pneumatique, est situé à une distance D de la droite XX', d'une part parallèle audit axe de rotation et d'autre part passant par le centre géométrique O du cercle circonscrit à la section transversale de la tringle (3), cercle qui est, dans le cas décrit, confondu avec la section elle-même.

Le retournement (10A) de la nappe de carcasse intérieure (1A), axialement la plus à l'intérieur, a son extrémité distante radialement de la droite XX' de la quantité H_{A}, qui est égale, dans le cas étudié, à 12 mm, soit 0,33 fois la distance D, égale à 36 mm. Quant aux extrémités, respectivement des nappes intérieures (10B) et (10C), elles sont radialement situées au-dessus du sommet A du bourrage (4) à des distances respectivement H_{B} et H_{C} de 55 mm et 68 mm.

Il en est de même de l'extrémité radiale du brin axialement intérieur (5I) de la languette (5), composée de câbles textiles radiaux identiques aux câbles des nappes de carcasse (mais qui peuvent être différents), extrémité située à une distance radiale L_{I} de 80 mm, par rapport à la droite XX', supérieure aux quantités H_{B} et H_{C} ci-dessus, les trois extrémités ainsi disposées radialement au-dessus du sommet A étant étagées entre ledit sommet et le point du flanc où le pneumatique possède une largeur axiale maximale. Quant à l'extrémité radiale du brin axialement extérieur (5E) de la languette intérieure (5), elle est séparée de la droite XX' par la distance radiale L_{E}, égale à 21 mm et, dans le cas de la dimension de pneumatique considéré, supérieure à la distance H_{A}, puisqu'égale à 0,58 D.

Les deux nappes de carcasse (1D) et (1E) dites extérieures recouvrent axialement à l'extérieur les retournements (10A, 10B, 10C) des nappes de carcasse (1A) à (1C) intérieures. Les nappes (1D) et (1E) sont enroulées autour de la tringle (3) sur une portion ou arc circulaire correspondant à un angle au centre du cercle circonscrit à la tringle (3) au plus égal à 180°, de sorte que les extrémités de ces nappes (1D) et (1E) soient radialement situées au-dessous de la droite XX' de référence.

Le bourrelet (2) de pneumatique est complété par une nappe de renforcement (6) ou languette extérieure de câbles textiles radiaux, ladite nappe permettant de mieux répartir les pressions entre le pneumatique et sa jante de service, ainsi que d'assurer une protection des nappes de carcasse contre les agressions de montage.

L'extrémité axialement extérieure (6E) de ladite languette est légèrement au-dessus de la droite XX' de référence (2 mm), alors que son extrémité axialement intérieure (6I) est au-dessous de ladite droite.

Une telle architecture a été testée sur volant dynamométrique dans des conditions pénalisantes pour l'endurance des bourrelets, conditions correspondantes à une simulation de roulage sur "taxiway" ( 10160 kg, 4572 m, 46 km/h), suivi d'un décollage de 0 à 300 km/h, les conditions de pression étant telles que la flèche d'écrasement du pneumatique sous les 10160 kg de charge soit de 52% ± 2% de sa hauteur.

La comparaison avec un pneumatique de même dimension, comprenant le même nombre de nappes de carcasse et deux languettes intérieure et extérieure, la nappe de carcasse intérieure la plus à l'intérieur ayant un retournement dont l'extrémité est située au-dessus du sommet A, et le brin extérieur de la languette intérieure ayant son extrémité au-dessous dudit sommet, met en évidence de manière nette et inattendue l'amélioration de l'endurance des bourrelets, puisque les enveloppes de l'invention, dans les conditions ci-dessus, ont réalisé un nombre de cycles "taxiway"-décollage supérieurs de 35% en moyenne.

## Revendications

1. Pneumatique P pour avion, gonflé à pression élevée, avec une bande de roulement, une armature de sommet et une armature de carcasse radiale (1) comprenant au moins deux nappes (1A, 1B, 1C) axialement intérieures de câbles textiles, enroulées autour d'une tringle (3) dans chaque bourrelet (2) de l'intérieur à l'extérieur en formant des retournements (10A, 10B, 10C) et au moins une nappe (1D,1E) axialement extérieure de câbles textiles superposée aux nappes intérieures (1A, 1B, 1C) sous l'armature de sommet et se séparant desdites nappes dans les bourrelets (2) pour s'étendre le long des retournements (10A, 10B, 10C), ladite tringle (3) étant radialement surmontée d'un bourrage (4) de mélange caoutchouteux vulcanisé, de forme sensiblement triangulaire et dont le sommet A, radialement le plus éloigné de l'axe de rotation, est à une distance D d'une droite XX', parallèle audit axe et passant par le centre géométrique O du cercle circonscrit à la section transversale de la tringle d'ancrage (3), dite droite de référence, et comprenant aussi au moins une languette intérieure (5), enroulée autour de la tringle (3) pour former un brin axialement intérieur (5I) et un brin axialement extérieur (5E), axialement adjacents au bourrage du dessus de tringle (4), caractérisé en ce que
- l'extrémité du brin axialement extérieur (5E) de la languette intérieure (5) est situé à une distance radiale L_{E} de la droite de référence XX' telle que L_{E} soit comprise entre 0,40 D et 0,80 D ;
- l'extrémité du retournement (10A) de la nappe de carcasse intérieure (1A) disposée axialement la plus à l'intérieur est située à une distance H_{A} de la droite de référence XX' telle que H_{A} soit comprise entre 0,15 D et 0,50 D, et en ce que,
- les extrémités respectivement du brin intérieur (5I) de la languette intérieure (5) et des retournements (10B, 10C) des nappes de carcasse intérieures (1B) et (1C) axialement les plus à l'extérieur sont situées à des distances radiales L_{I} et H_{B}, H_{C}, de la droite de référence XX', supérieures à la distance D.

2. Pneumatique selon la revendication 1, caractérisé en ce que l'extrémité du brin intérieur (5I) de la languette intérieure (5) est plus éloignée de la droite de référence XX' que l'(les) extrémité(s) du (des) retournement (10B, 10C) de la (des) nappe(s) de carcasse intérieure(s) (1B, 1C) axialement la (les) plus à l'extérieur.

3. Pneumatique selon l'une des revendications 1 ou 2, caractérisé en ce que les extrémités respectivement des brins de la languette (5I,5E) et des retournements (10A, 10B, 10C) des nappes de carcasse intérieures (1A, 1B, 1C) sont radialement étagées.

4. Pneumatique selon l'une des revendications 1 à 3, caractérisé en ce que chaque bourrelet (2) est complété par la présence d'une nappe de renforcement additionnelle (6) de câbles textiles ou languette extérieure, située autour de la tringle (3) axialement et radialement le plus à l'extérieur, et dont l'extrémité du brin axialement extérieur (6E) est située à une distance de la droite XX' inférieure ou égale à ± 0,15 D.

## Patentansprüche

1. Flugzeugreifen P, der auf einen erhöhten Druck aufgepumpt ist, mit einer Lauffläche, einer Scheitelbewehrung und einer radialen Karkassenbewehrung (1), die mindestens zwei axial innenliegende Lagen (1A, 1B, 1C) aus Textilseilen aufweist, die um einen Wulstkern (3) in jedem Wulst (2) von innen nach außen herumgeschlagen sind, wobei sie Umschläge (10A, 10B, 10C) bilden, sowie mindestens eine axial außenliegende Lage (1D, 1E) aus Textilseilen, die über den innenliegenden Lagen (1A, 1B, 1C) unter der Scheitelbewehrung liegt und von den genannten Lagen in den Wülsten (2) getrennt ist, um sich längs der Umschläge (10A, 10B, 10C) zu erstrecken, wobei über dem genannten Wulstkern (3) ein Zwickel (4) aus vulkanisierter, gummiartiger Mischung mit im wesentlichen dreieckiger Form angebracht ist, wovon der Scheitel A, der von der Drehachse radial am weitesten entfernt ist, sich unter einem Abstand D von einer Geraden XX' befindet, die zur genannten Achse parallel ist und durch die geometrische Mitte O des Kreises hindurchläuft, der dem Querschnitt des Verankerungs-Wulstkerns (3) umschrieben ist, die Bezugsgerade genannt ist, und der auch mindestens eine innere Zunge (5) aufweist, die rund um den Wulstkern (3) herumgeschlagen ist, um ein axial innenliegendes Trum (5I) und ein axial außenliegendes Trum (5E) zu bilden, die dem Zwickel über dem Wulstkern (4) axial benachbart sind,
dadurch gekennzeichnet, daß
- das Ende des axial innenliegenden Trums (5E) der inneren Zunge (5) unter einem radialen Abstand L_{E} zur Bezugsgeraden XX' so gelegen ist, daß L_{E} zwischen 0,40 D und 0,80 D liegt;
- das Ende des Umschlages (10A) der inneren Karkassenlage (1A), die axial am weitesten innenliegt, unter einem Abstand H_{A} von der Bezugsgeraden XX' so gelegen ist, daß H_{A} zwischen 0,15 D und 0,50 D liegt, und daß
- die Enden jeweils des innenliegenden Trums (5I) der inneren Zunge (5) und der Umschläge (10B, 10C) der inneren Karkassenlagen (1B, 1C), die axial am weitesten außenliegen. unter radialen Abständen L_{I} und H_{B}, H_{C} von der Bezugsgeraden XX' gelegen sind, die größer sind als der Abstand D.

2. Reifen nach Anspruch 1, dadurch gekennzeichnet, daß das Ende des inneren Trums (5I) der innenliegenden Zunge (5) von der Bezugsgeraden XX'weiter entfernt ist als das bzw. die Ende(n) des Umschlags bzw. der Umschläge (10B,C) der innenliegenden Karkassenlage(n) (1B, 1C), die axial am weitesten außen liegt bzw. liegen.

3. Reifen nach einem der Ansprüche 1 oder 2, dadurch gekennzeichnet, daß die Enden jeweils der Trums der Zunge (5I, 5E) und der Umschläge (10A, 10B, 10C) der innenliegenden Karkassenlagen (1A, 1B, 1C) radial abgestuft sind.

4. Reifen nach einem der Ansprüche 1 bis 3, dadurch gekennzeichnet, daß jeder Wulst (2) durch die Anwesenheit einer zusätzlichen Verstärkungslage (6) aus Textilseilen oder einer äußeren Zunge fertiggestellt ist, die axial und radial am weitesten außenliegend rund um den Wulstkern (3) angeordnet ist, wovon das axial außenliegende Ende (6E) unter einem Abstand von der Geraden XX' gelegen ist, der kleiner oder gleich ± 0,15 D ist.

## Claims

1. A tyre P for aircraft, inflated to a high pressure, having a tread, a crown reinforcement and a radial carcass reinforcement (1) comprising at least two axially inner plies (1A, 1B, 1C) of textile cables, wound around a bead wire (3) in each bead (2) from the inside to the outside, forming upturns (10A, 10B, 10C), and at least one axially outer ply (1D, 1E) of textile cables superimposed on the inner plies (1A, 1B, 1C) beneath the crown reinforcement and separating from said plies in the beads (2) to extend along the upturns (10A, 10B, 10C), said bead wire (3) being radially surmounted by a filler (4) of vulcanised rubber mix, of substantially triangular shape and the apex A of which which is radially farthest from the axis of rotation is at a distance D from a straight line XX', parallel to said axis and passing through the geometric centre O of the circle circumscribed on the cross-section of the anchoring bead wire (3), referred to as reference straight line, and also comprising at least one inner bead reinforcement ply (5), wound around the bead wire (3) to form an axially inner strand (5I) and an axially outer strand (5E) which are axially adjacent to the filler of the top of the bead wire (4), characterised in that
- the end of the axially outer strand (5E) of the inner bead reinforcement ply (5) is located at a radial distance L_{E} from the reference straight line XX' such that L_{E} is between 0.40 D and 0.80 D;
- the end of the upturn (10A) of the axially innermost inner carcass ply (1A) is located at a distance H_{A} from the reference straight line XX' such that H_{A} is between 0.15 D and 0.50 D, and in that
- the respective ends of the inner strand (5I) of the inner bead reinforcement ply (5) and of the upturns (10B, 10C) of the axially outermost inner carcass plies (1B) and (1C) are located at radial distances L_{I} and H_{B}, H_{C} from the reference straight line XX' which are greater than the distance D.

2. A tyre according to Claim 1, characterised in that the end of the inner strand (5I) of the inner bead reinforcement ply (5) is farther from the reference straight line XX' than the end(s) of the upturn(s) (10B, 10C) of the inner carcass ply (plies) (1B, 1C) which are axially outermost.

3. A tyre according to one of Claims 1 or 2, characterised in that the ends of the strands of the bead reinforcement ply (5I, 5E) and of the upturns (10A, 10B, 10C) of the inner carcass plies (1A, 1B, 1C) respectively are radially stepped.

4. A tyre according to one of Claims 1 to 3, characterised in that each bead (2) is finished off by the presence of an additional reinforcement ply (6) of textile cables or outer bead reinforcement ply, located around the axially and radially outermost bead wire (3), and the end of the axially outer strand (6E) of which is located at a distance from the straight line XX' which is less than or equal to ± 0,15 D.
